# EUROPEAN PATENT APPLICATION

(11) **EP 4 717 381 A1**
(43) Date of publication of application: **01.04.2026**
(21) Application number: 25204770.9
(22) Date of filing: 25.09.2025
(51) Int. Cl.: B23B 5/16

(54) **PIPE PREPARATION TOOL**

(30) Priority: 27.09.2024 US 202418898988
(71) Applicant: Black & Decker, Inc., New Britain, CT 06053 (US)
(72) Inventor: PARAB, Rohan, Towson, 21286 (US); GROSS, Paul G., White Marsh, 21162 (US); MCMANUS, Samuel C., Bel Air, 21014 (US)
(74) Representative: SBD IPAdmin

(57) **Abstract**

A pipe preparation tool has a housing (1), a motor (13) mounted within the housing (1), a head mechanism (40) disposed on the housing (1), a rotatable blade holder (42) disposed within the head mechanism (40), and a blade (42B) attached to the blade holder (42). The tool may include a power tool battery pack (12) attached to the housing (1) and electrically connected to the motor (13). A pipe may engage the blade (42B) in a first orientation and a second orientation opposite to the first orientation. The blade (42B) may have first and second opposite cutting edges, wherein the pipe can engage the first cutting edge (42BI, 42BO) of the blade (42B) when in the first orientation and the second cutting edge (42BI, 42BO) of the blade (42B) when in the second orientation.

## Description

The present invention relates to pipe preparation tools and, more specifically, to battery-powered pipe preparation tools.

Pipe cutters perform cutting operations in various ways, such as with sawing motions or by successive ratcheting of a pipe cutter knife through a pipe. Oftentimes, these methods of pipe cutting result in imperfect cuts with uneven edges or burrs. Such uneven edges or burrs cause difficulties in mounting pipe fittings or damage O-rings. Accordingly, it is preferable to provide a tool to even the edges of and/or remove the burrs on the pipe.

The present invention provides a pipe preparation tool according to Claim 1 of the appended claims.

Accordingly, a pipe preparation tool according to the invention comprises: a housing; a motor mounted within the housing; a head mechanism disposed on the housing; a rotatable blade holder disposed within the head mechanism; and a blade attached to the blade holder; wherein a pipe can engage the blade in a first orientation and a second orientation opposite to the first orientation.

Preferred, and other optional, features of the invention are defined and described in the dependent claims.

Preferred embodiments of the invention will now be described, by way of example, with reference to the accompanying drawings, of which:
Figure 1 is a front perspective view of the tool according to the invention;
Figure 2 is a partial cross-sectional view of the tool;
Figure 3 is a cross-sectional view of a head mechanism of the tool;
Figure 4 is a cross-sectional view along plane A-A shown in FIG. 3;
Figures 5-7 are cross-sectional views along plane A-A shown in FIG. 3, where figures 5-7 show steps of installing a blade into the tool;
Figure 8 illustrates the orientation of the tool for processing the outer edge of a pipe; and
Figure 9 illustrates the orientation of the tool for processing the inner edge of the pipe.

Referring now to the drawings, tool 10 is a pipe preparation tool to prepare and/or deburr a variety of pipes. For example, the illustrated tool 10 is able to process or deburr a pipe having a maximum 2 in. nominal (e.g., 2.375 in.) inner diameter, and/or a maximum 2.375 in. outer diameter. Additionally, the illustrated tool 10 is adapted to deburr steel, copper and/or hard plastics, like polyvinyl chloride ("PVC") pipe.

Preferably, tool 10 includes a housing 1 preferably including a handle 1HH, a head mechanism 40 disposed on housing 1, a rotatable blade holder 42 disposed within the head mechanism 40, a blade 42B attached to the blade holder 42, and a motor 13 for driving blade 42B.

A power tool battery pack 12 may be attached to housing 1 and electrically connected to tool 10 in order to power motor 13. Preferably power tool battery pack 12 may have a nominal voltage of 18 volts. The battery pack 12 may include five (5) lithium-ion battery cells and is coupled to the handle 1HH by sliding. Persons skilled in the art shall recognize that the battery pack 12 may alternatively include fewer or more battery cells, the battery cells may have chemistries other than lithium-ion, and/or the battery pack 12 may be coupled to the handle 1HH using other coupling means. Battery pack 12 may be electrically connected to tool 13 via terminals 1T disposed on housing 1.

A trigger 31 is disposed on housing 1 and preferably on handle 1HH. A switch lock 32 is movably connected to trigger 31. Persons skilled in the art shall recognize that switch lock 32 may move translatably relative to the trigger 31. The trigger 31 is used for controlling the motor 13 to work or not to work, and the switch lock 32 can prevent the user from activating the motor 13 accidentally.

The trigger 31 actuates switch 33 in order to open or close the circuit to power or deactivate the motor 13. Switch 33 may be connected to a controller 34, which in turn may be connected to motor 13.

Controller 34 preferably has a microprocessor that is programmed to provide different functions. For example, controller 34 may provide a soft-start function (where motor speed increases slowly at start-up) and/or a soft-stop function (where motor speed decreases slowly when the user de-activates trigger 31). Controller 34 may also monitor and control the motor current to avoid any damage to battery pack 12.

Controller 34 may receive other inputs to provide additional functionalities for tool 10. For example, a speed selector 35 may be disposed on housing 1. When a user selects a first speed, controller 34 may limit the motor current to provide a low motor speed. Similarly, when a user selects a second speed, controller 34 may allow the full motor current to provide a high motor speed.

Persons skilled in the art shall recognize that speed selector 35 may provide more speed selections beyond the first two discussed above. For example, speed selector 35 may have a third position to allow the user to select a third speed. Controller 34 would then control the motor current to provide a motor speed between the low and high speeds. For example, the low, medium and high speeds could be 80, 100, and 150 RPM, respectively.

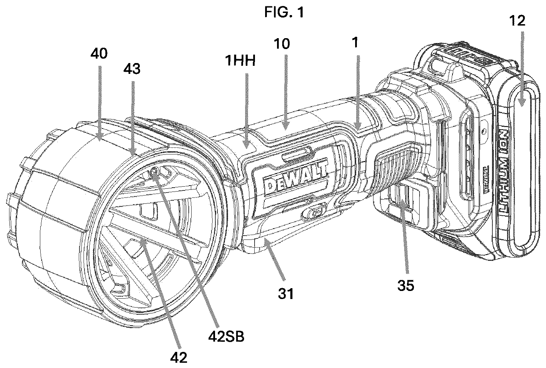

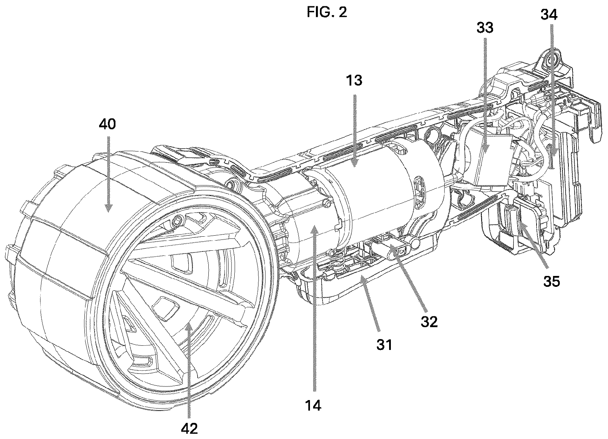

Referring to FIGS. 1-4, motor 13 is disposed in housing 1 and preferably within handle 1HH. The output shaft of motor 13 may be connected to a transmission 11. Preferably, the transmission 11 comprises a planetary gearbox 14 and a bevel gear 16. The planetary gearbox 14 is preferably connected to the output shaft of the motor 13.

The bevel gear 16 is preferably connected to the planetary gearbox 14. The driving bevel gear 16 is preferably meshingly engaged with a driven bevel gear 17, and ultimately rotatably drives blade holder 42 (and thus blade 42B). Persons skilled in the art shall recognize that bevel gear 17 may be a spiral gear.

Blade holder 42 is rotatably held by head mechanism 40, which is attached to housing 1. Head mechanism 40 preferably has a head housing 43, a blade casing 42C rotatably connected to head housing 43, blade holder 42 attached to blade casing 42C, and a blade 42B preferably removably attached to blade holder 42. Preferably, bearings or bushings 44 may be disposed between blade casing 42C and head housing 43. Persons skilled in the art shall recognize that bushings 44 may be substantially annular and made of aluminum or plastic.

Blade holder 42 preferably has a plurality of ribs 42R that converge into a semi-cone (e.g. substantially a cone, or e.g. substantially a truncated cone). Preferably blade holder 42 is symmetrical about rotational axis 42A. Axis 42A may be disposed within plane A-A.

Blade 42B may be shaped substantially like a parallelogram and preferably a rhomboid, with additional tabs 42BT, 42BB disposed on the ends of the rhomboid. Blade 42B preferably has at least two cutting edges 42BI, 42BO. Blade 42B may be made of hardened steel.

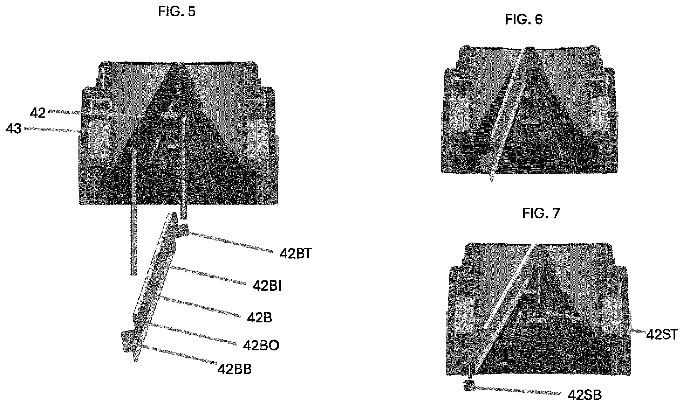

Referring to FIGS. 5-7, blade 42B may be inserted into blade holder 42. Preferably top tab 42BT may be disposed first against blade holder 42, then blade 42B is rotated towards blade holder 42 so that bottom tab 42BB contacts blade holder 42. Blade 42B can then be secured by screws 42ST, 42SB. Tabs 42BT, 42BB are preferably sandwiched between blade holder 42 and screws 42ST, 42SB, respectively. Persons skilled in the art shall recognize that blade 42B can be removed by unscrewing screws 42ST, 42SB, and removing blade 42B from blade holder 42.

Persons skilled in the art shall recognize that ribs 42R and cutting edge 42BO are preferably aligned forming an inner cone. Preferably the inclination of such inner cone is at an angle between 15 degrees and 75 degrees (and preferably between 30 and 45 degrees) relative to the axis 42A. Similarly, ribs 42R and cutting edge 42BI are preferably aligned forming an outer cone. Preferably the inclination of such outer cone is at an angle between 15 degrees and 75 degrees (and preferably between 30 and 45 degrees) relative to the axis 42A.

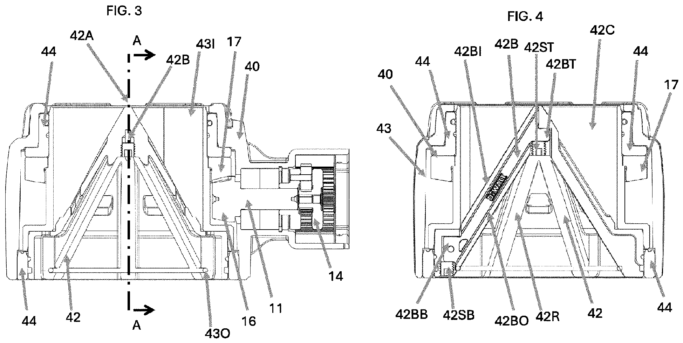

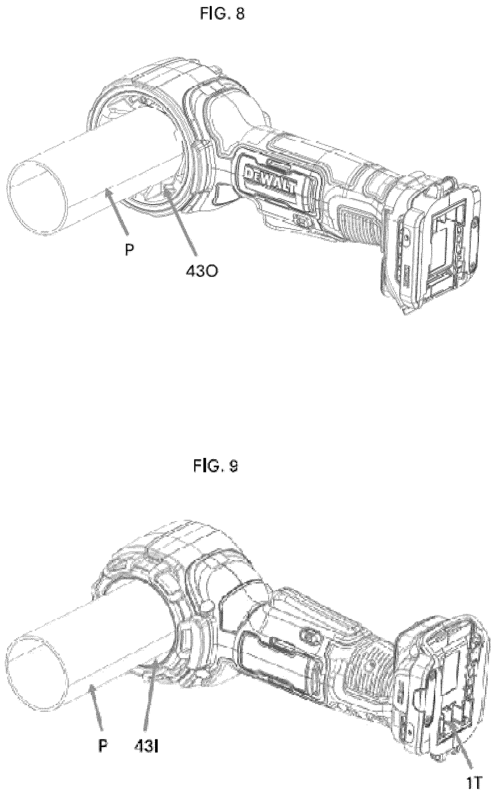

Referring to FIGS. 3-4 and 8-9, head housing 43 preferably has two openings 43I, 43O. Pipe P may be inserted into openings 43I, 43O for processing and/or deburring. Depending upon the orientation of tool 10, the user can process the outer edge or the inner edge of pipe P.

Referring to FIGS. 3-4 and 8, pipe P may be inserted into opening 43O, contacting ribs 42R and cutting edge 42BO. When the user activates trigger 31, trigger 31 will in turn activate switch 33, which in turn activates the motor 13. As the output shaft of motor 13 rotates, planetary gearbox 14 and bevel gear 16 rotate, driving bevel gear 17, which ultimately rotatably drives blade holder 42 (and thus blade 42B). Cutting edge 42BO of blade 42B will contact the outer edge of pipe P, shaving material off pipe P.

Ribs 42R and cutting edge 42BO are preferably aligned forming an inner cone. Such arrangement facilitates centering pipe P relative to the ribs 42R and cutting edge 42BO, allowing the outer edge of pipe P to be processed evenly. Persons skilled in the art shall recognize that, once the outer edge of pipe P is processed, the outer edge will be bevelled due to the orientation of cutting edge 42BO. Preferably the outer edge of pipe P can be bevelled at an angle between 15 degrees and 75 degrees (and preferably between 30 and 45 degrees) relative to the axis of pipe P.

If the user however wants to process the inner edge of pipe P, the user can rotate tool 10, so that pipe P can be inserted into opening 43I, . , contacting ribs 42R and cutting edge 42BI, as shown in FIGS. 3-4 and 9. As before, when the user activates trigger 31, trigger 31 will in turn activate switch 33, which in turn activates the motor 13. As the output shaft of motor 13 rotates, planetary gearbox 14 and bevel gear 16 rotate, driving bevel gear 17, which ultimately rotatably drives blade holder 42 (and thus blade 42B). Cutting edge 42BI of blade 42B will contact the inner edge of pipe P, shaving material off pipe P.

Ribs 42R and cutting edge 42BI are preferably aligned forming an outer cone. Such arrangement facilitates centering pipe P relative to the ribs 42R and cutting edge 42BI, allowing the inner edge of pipe P to be processed evenly. Persons skilled in the art shall recognize that, once the inner edge of pipe P is processed, the inner edge will be bevelled due to the orientation of cutting edge 42BI. Preferably the inner edge of pipe P can be bevelled at an angle between 15 degrees and 75 degrees (and preferably between 30 and 45 degrees) relative to the axis of pipe P.

The tool disclosed by the present invention is not limited by the contents described above and the structure shown in the drawings. Rather, those of ordinary skill in the art will appreciate that changes, substitutions, and modifications to the configurations and positions of illustrated and described parts can be made while still falling with the scope of the invention set forth in the specification and claims that follow.

## Claims

1. A pipe preparation tool, comprising: a housing; a motor mounted within the housing; a head mechanism disposed on the housing; a blade holder disposed within the head mechanism and rotatable relative to the housing; and a blade attached to the blade holder and rotatable therewith; wherein the tool is configured such that a pipe may be selectively engaged by the blade in a first orientation of the tool with respect to the pipe, and in a second orientation of the tool with respect to the pipe which is opposite to the first orientation.

2. The pipe preparation tool of Claim 1, wherein the blade holder is rotatable about a rotational axis, and preferably wherein a pipe may be engaged by the blade in a configuration such that a longitudinal axis of the pipe is substantially coaxial with the rotational axis.

3. The pipe preparation tool of Claim 2, wherein the blade holder is symmetrical about the rotational axis.

4. The pipe preparation tool of any preceding claim, wherein the blade holder has a plurality of ribs configured such that they converge in a substantially conical or truncated-conical arrangement.

5. The pipe preparation tool of Claim 4, wherein the blade is disposed on one of the plurality of ribs.

6. The pipe preparation tool of any preceding claim, wherein the blade has first and second opposite cutting edges, and wherein the pipe can be engaged by the first cutting edge of the blade when the tool is in the first orientation, and the pipe can be engaged by the second cutting edge of the blade when the tool is in the second orientation.

7. The pipe preparation tool of any preceding claim, further comprising a power tool battery pack attached to the housing and electrically connected to the motor.

8. The pipe preparation tool of Claim 7, further comprising a switch electrically connected to at least one of the motor and the power tool battery pack.

9. The pipe preparation tool of Claim 8, further comprising a trigger disposed on the housing, wherein the trigger activates and/or deactivates the switch.

10. The pipe preparation tool of Claim 9, further comprising a switch lock movably connected to the trigger to prevent the trigger from activating the motor.

11. The pipe preparation tool of any one of claims 7 to 10, further comprising: a controller electrically connected to the at least one of the motor and the power tool battery pack; and a speed selector disposed on the housing for selecting a motor speed.

12. The pipe preparation tool of Claim 11, wherein the speed selector has first, second and third positions for selecting corresponding first, second and third motor speeds.

13. The pipe preparation tool of any preceding claim, further comprising a transmission configured to be driven by the motor and to drive the rotation of the blade holder.

14. The pipe preparation tool of Claim 13, wherein the transmission comprises a driving bevel gear configured to be rotated by the motor, and a driven bevel gear meshed with the driving bevel gear and configured to rotate the blade holder and thus to rotate the blade.

15. The pipe preparation tool of Claim 14, wherein the transmission also comprises a planetary gearbox connected to the motor, and wherein the driving bevel gear is connected to the planetary gearbox.
